Europäisches Patentamt

European Patent Office

Office européen des brevets

(19)

(11) EP 1 330 114 A2

(12) **EUROPEAN PATENT APPLICATION**

(43) Date of publication:
**23.07.2003 Bulletin 2003/30**

(51) Int Cl.⁷: **H04N 1/409**

(21) Application number: **03000089.7**

(22) Date of filing: **08.01.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **16.01.2002 JP 2002007345**

(71) Applicant: **Noritsu Koki Co., Ltd.
Wakayama-shi, Wakayama-ken 640-8550 (JP)**

(72) Inventor: **Kuramoto, Hisakazu
Wakayama-shi, Wakayama 640-8550 (JP)**

(74) Representative: **Müller - Hoffmann & Partner
Patentanwälte,
Innere Wiener Strasse 17
81667 München (DE)**

(54) **Method and apparatus for improving sharpness of images**

(57) An image processing device for sharpening an image comprises an exposure judging section (5) and a grained area expecting section (6) for expecting grained area brought about in an output digital image in accordance with density of an input image; and a second sharpening strength calculating section (7) for adjusting strength of a sharpening process performed with respect to the input image, corresponding to an expected result concerning the grained area.

## FIG. 1

EP 1 330 114 A2

**Description**

FIELD OF THE INVENTION

The present invention relates to an image processing device, an image processing method, an image processing program, and a storage medium storing the image processing program, by which image data of an image recorded on a photo-film such as a film is subjected to an image process so as to be provided to a photo-printing device. The present invention relates particularly to an image processing device, an image processing method, an image processing program, and a storage medium storing the image processing program, by which a sharpening process for reducing grained area of an output image that is caused by a film grainy noise, an electric noise, and the like is performed.

BACKGROUND OF THE INVENTION

Conventionally, as a photo-printing device for printing an image recorded on a film onto a printing paper, there have been proposed various kinds of an analog printer for directly exposing the printing paper and various kinds of a digital printer which reads the image recorded on the film by means of a CCD (charge coupled device) so as to expose the printing paper in accordance with the obtained image data. Particularly, the digital printer is advantageous in that: it is possible to perform color correction and density correction etc., that cannot realized by the analog printer, by using the digital printer in combination with an image processing device for performing the image process, such as the color correction and the density correction, with respect to the image data, and it is possible to obtain the image which satisfies needs of a customer easily and quickly. Thus, such a digital printer is widely used now.

Incidentally, a photosensitive layer includes a gelatinoid layer in which minute particles of silver halide crystals are dispersed. Further, a latent image core is brought about from the silver halide crystals due to photoreception, and the particles of silver halide having the latent image core is subjected to image development so as to be reduced into particles of metal silver. As a result, image portions uniformly exposed are such that black silver particles are irregularly dispersed in an opaque gelatinoid layer. A group constituted of a number of silver particles generated in this manner is referred to as "grainy cloud", hereinbelow.

Thus, image data the digital printer reads from the film contains information concerning the grainy cloud in the film. That is, when a sharpening process is performed with respect to whole pixels in the image that have been recorded on the film, the sharpening process is performed also with respect to the grainy cloud.

That is, the grainy cloud is made conspicuous due to the sharpening process, so that the image having been subjected to the image process seems to be grained, thereby deteriorating the image quality.

Particularly, in a case where the image of the film is enlarged so as to be printed, also the grainy cloud in the film is enlarged so as to be outputted, so that there occurs such a problem that the grained area in the output image is made conspicuous.

Further, in a case where the image on the film is in a state of underexposure and the film is a negative film, a process for strengthening contrast is performed so as to prevent the output image from being blurred. This process for strengthening the contrast also causes the grainy cloud to be conspicuous, so that there occurs such a problem that the grained area in the output image is made conspicuous.

While, in a case where the image on the film is in a state of overexposure and the film is a negative film, light that the CCD functioning as an imaging device reads from the film is little. Thus, an output of the CCD is comparatively small, so that the electric noise having been brought about in the digital printer is made conspicuous in the image information. When the sharpening process is performed with respect to the image in which the electric noise is conspicuous, the electric noise is further emphasized, so that there occurs such a problem that the output image is made more grained.

SUMMARY OF THE INVENTION

The present invention is conceived from the view point of the foregoing problems, and its object is to provide an image processing device, an image processing method, an image processing program, and a storage medium storing the image processing program, by which it is possible to output a preferable digital image in which the grained area is reduced.

In order to solve the foregoing problems, the image processing device of the present invention performs a sharpening process with respect to an input image so as to output a digital image, and includes: grained area expecting means for expecting grained area of an output digital image in accordance with density of the input image; and sharpening strength calculating means for adjusting strength of a sharpening process performed with respect to the input image, corresponding to an expected result obtained by the grained area expecting means.

Further, the image processing method of the present invention includes the steps of: a first step of expecting grained area brought about in the digital image, in accordance with density of the input image; and a second step of adjusting strength of the sharpening process performed with respect to the input image, corresponding to an expected result obtained in the first step.

The image processing device or the image processing method of the present invention is such that the sharpening process is performed with respect to the input image so as to output the image as the digital image. However, the output digital image is sometimes made grained depending on the density of the input image.

For example, in a case where the input image is an analog image on the negative film, when the whole image is thinned, that is, the whole image is in a state of underexposure, the output digital image is made grained due to the grainy cloud on the film. While, when the whole image is thickened, that is, the whole image is in a state of overexposure, it is necessary to reduce the output of the image processing device, so that the electric noise brought about in the image processing device is made conspicuous in the information of the output digital image. As a result, the output digital image is made conspicuous.

Then, the image processing device of the present invention particularly includes: grained area expecting means for expecting the grained area brought about in the output digital image in accordance with the density of the input image; and sharpening strength calculating means for adjusting strength of the sharpening process performed with respect to the input image, corresponding to an expected result obtained by the grained area expecting means.

Further, the image processing method of the present invention, in which a sharpening process is performed with respect to an input image so as to output a digital image, includes: a first step of expecting grained area brought about in the digital image, in accordance with density of the input image; and a second step of adjusting strength of the sharpening process performed with respect to the input image, corresponding to an expected result obtained in the first step.

That is, the strength of the sharpening process that is adjusted by the sharpening strength calculating means is adjusted corresponding to the grained area, brought about in the output image, that has been expected by the grained area expecting means.

Thus, in a case where the grained area brought about in the output digital image is expected to be great, it is possible to set the sharpening strength calculating means to make adjustment so that the sharpening strength is small. When the sharpening process is performed with the small sharpening strength having been adjusted, it is possible to prevent the grained area caused by the grainy cloud or the electric noise on the film from being conspicuous.

Further, as to the image processing method of the present invention, the same actions as in (a) the grained area expecting means in the image processing device and (b) the sharpening strength calculating means of the present invention are respectively realized in the first step and the second step.

Thus, it is possible to obtain such an effect that it is possible to output a digital image, having preferable image quality, in which the grained area is reduced.

For a fuller understanding of the nature and advantages of the invention, reference should be made to the ensuing detailed description taken in conjunction with the accompanying drawings.

BRIEF DESCRIPTION OF THE DRAWINGS

Fig. 1 is a block diagram showing an arrangement of an image processing device according to an embodiment of the present invention and a digital exposing system containing the image processing device.

Fig. 2 is a flow chart showing a procedure in which a first sharpening strength calculating section of the image processing device of Fig. 1 calculates basic sharpening strength.

Fig. 3 is a pattern diagram showing a judgment table used so that an exposure judging section of the image processing device of Fig. 1 gives judgment concerning an under/over exposure probability.

Fig. 4 is a flow chart showing a procedure in which a second sharpening strength calculating section of the image processing device of Fig. 1 adjusts the basic sharpening strength.

Fig. 5 is a flow chart showing a procedure in which a sharpening process section of the image processing device of Fig. 1 performs a sharpening process.

Fig. 6 is a pattern diagram showing an example of a moving average filter used when the sharpening process section of the image processing device of Fig. 1 performs a pre-blurring process.

Fig. 7 is a drawing that illustrates a result obtained by outputting an image that has not been subjected to an image processing method according to the present invention.

Fig. 8 is a drawing that illustrates a result obtained by outputting an image that has been subjected to the image processing method according to the present invention.

DESCRIPTION OF THE EMBODIMENTS

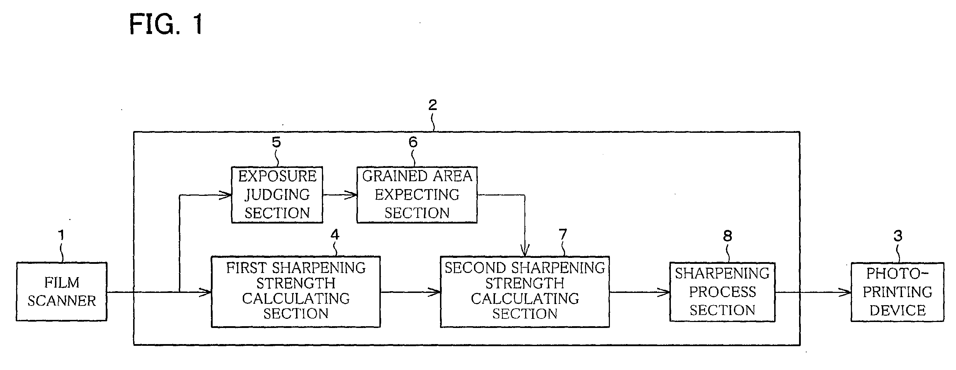

The following description will discuss one embodiment of the present invention referring to Fig. 1 through Fig. 8.

As shown in Fig. 1, a digital exposing system according to the present embodiment includes a film scanner 1, an image processing device 2, and a photo-printing device 3.

By receiving light, obtained via a negative film which functions as a photo-film, by means of a CCD (Charge Coupled Device) and the like, the film scanner 1 reads an image recorded on the negative film, and outputs image data of R, G, and B, corresponding to the image, to the image processing device 2.

The photo-printing device 3 exposes a developing paper, which functions as a sensitive material, in accordance with the image data from the image processing device 2, so that an image is printed on the developing paper. As long as light irradiated on the developing paper can be modulated according to digital image data, any device may be used as an exposing section which exposes the developing paper. For example, the exposing section includes a PLZT exposing head, a DMD (digital micro mirror device), an LCD (liquid crystal device), an LED panel, a laser, an FOCRT (Fiber Optic Cathode Ray Tube), a CRT, and the like.

Note that, the photo-printing device 3 may be arranged so as to be able to perform (a) scanning with respect to the negative film and (b) exposure with respect to the developing paper. In this case, the digital exposing system is constituted of the image processing device 2 and the photo-printing device 3, so that it is possible to simplify the system.

The image processing device 2 includes: a first sharpening strength calculating section 4; an exposure judging section (grained area expecting means) 5; a grained area expecting section (grained area expecting means) 6; a second sharpening strength calculating section (sharpening strength expecting means) 7; and a sharpening process section 8. Note that, Fig. 1 shows an arrangement of the image processing device 2, and illustrates mainly the sharpening process. That is, as to color correction, density correction, gradation modulation, and the like, typically performed by the image processing device 2, description thereof is omitted in Fig. 1.

The first basic sharpening strength calculating section 4 calculates the sharpening strength in a case where suppression of the grained area in the output image is not taken into consideration (hereinbelow referred to as basic sharpening strength). How the first basic sharpening strength calculating section 4 calculates the basic sharpening strength will be detailed later.

The exposure judging section 5 judges an exposure condition of a film in accordance with density of a photo-film. The grained area expecting section 6 expects the grained area of the output image in accordance with the exposure condition of the film that has been judged by the exposure judging section 5. As to the exposure judgment performed by the exposure judging section 5 and the expectation of the grained area performed by the grained area expecting section 6, detail description will be given later.

The second sharpening strength calculating section 7 adjusts the basic sharpening strength so as to perform the sharpening process for suppressing the grained area in the output image in accordance with the basic sharpening strength calculated by the first sharpening strength calculating section 4 and the expected grained area value calculated by the grained area expecting section 6. A procedure in which the second sharpening strength calculating section 7 adjusts the basic sharpening strength will be described later.

The sharpening strength process section 8 performs a sharpening process in accordance with the basic sharpening strength that has been adjusted by the second sharpening strength calculating section 7. The sharpening process performed by the sharpening process section 8 will be described later.

According to the arrangement, the image processing device 2 of the present embodiment causes the sharpening process section 8 to perform the sharpening process in accordance with (a) the exposing condition of the film that has been judged by the exposure judging section 5 and (b) the grained area that has been expected by the grained area expecting section 6.

Next, detail description will be given on (1) a procedure in which the first sharpening strength calculating section 4 calculates the basic sharpening strength, (2) a procedure in which the exposure judging section 5 judges the exposure condition, and a procedure in which the grained area expecting section 6 expects the grained area, and (3) a procedure in which the second basic sharpening strength calculating section 7 adjusts the basic sharpening strength, and (4) a procedure in which the sharpening process section 8 performs the sharpening process, in this order.

(1) Procedure in which the first basic sharpening strength calculating section 4 calculates the basic sharpening strength.

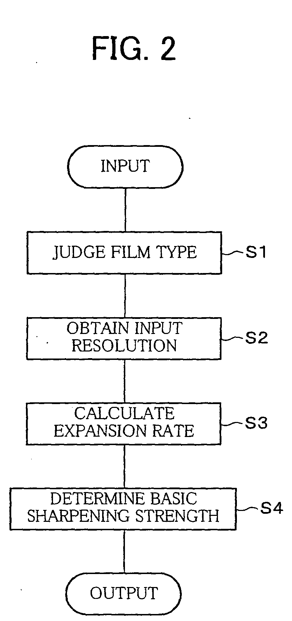

As shown in Fig. 2, in the procedure in which the first basic sharpening strength calculating section 4 calculates the basic sharpening strength, at first in S1, judgment is given on what kind of film is used as a film from which an image is read by the film scanner 1.

Concretely, whether the film is a negative film or a positive film is judged, and a size of the film is judged. Examples of the size of the film include a 110 film, a 120 film, a 135 film, and the like in terms of a JIS standard.

Next, in S2, resolution of the film scanner 1 is obtained. Note that, the resolution is determined depending on a scaling factor of a zoom lens in the film scanner 1. For example, when the scaling factor of the zoom lens varies from 0.88 to 2.0, it is possible to vary the resolution from 1200×1800DPI (Dot Per Inch) to 3000×2000DPI. That is, the setting is such that: as the scaling factor of the zoom lens is higher, the resolution is higher.

Next, in S3, an expansion rate is calculated. The expansion rate is determined depending on an input pixel number and an output pixel number of the CCD in the film scanner 1.

In accordance with the film type, the input resolution, and the expansion rate obtained in S1 to S3 in this manner, the basic sharpening strength is determined in S4.

That is, in a case where the film type is judged as a negative film in S1, the basic sharpening strength is set to be low. While, in a case where the film type is judged as a positive film in S1, the basic sharpening strength is set to be high.

Further, when the resolution obtained in S2 is higher, it is necessary to heighten the sharpness in the output image, so that the basic sharpening strength is set higher.

While, when the expansion rate calculated in S3 is higher, the basic sharpening strength is set to be higher.

Note that, although the basic sharpening strength is determined in S4 after performing the processes of S1, S2, and S3 in the flow chart of Fig. 2, the order of the steps S1 to S3 is not necessarily limited. That is, as to the steps S1 to S3, the process may be started from any step, or steps S1 to S3 may be performed simultaneously.

(2) Procedure in which the exposure judging section 5 judges the exposure condition, and a procedure in which the grained area expecting section 6 expects the grained area.

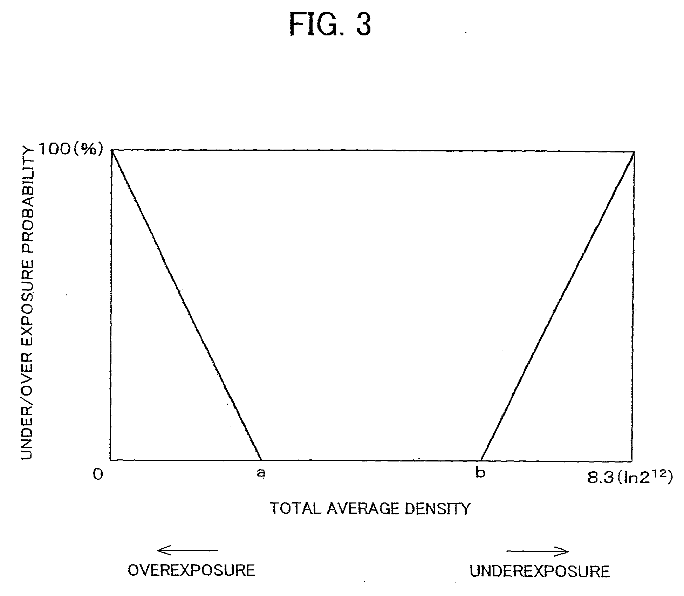

The exposure judging section 5 calculates an under/over exposure probability in accordance with total average density by using an expectation table shown in Fig. 3, so as to judge the exposure condition. Note that, the under/over exposure probability indicates a probability at which an image recorded on the film is in a state of underexposure, or a probability at which an image recorded on the film is in a state of overexposure.

As shown in Fig. 3, in the foregoing table, a logarithmic value of the total average density of an image on a film is set as a horizontal axis, and the under/over exposure probability is set as a vertical axis. Further, two threshold values a and b (a<b) are set in the horizontal axis of the expectation table.

Description is given on a case where the film scanner 1 reads an image on the negative film as a digital image of 12 bits for example.

In this case, the minimum value (MIN) of density which can be obtained in an input image is 0, and the maximum value (MAX) of the density which can be obtained in the input image is $1n2^{12} = 8.3$. Further, as the logarithmic value of the total average density is smaller, the image on the negative film is darker, so that it is highly likely that this condition is underexposure. While, as the logarithmic value of the total average density is larger, the image on the negative film is brighter, so that it is highly likely that this condition is overexposure.

Then, in the expectation table, it is assumed that when the logarithmic value of the total average density is 0, the under/over exposure probability is 100%, and when the logarithmic value of the total average density is the threshold value a, the under/over exposure probability is 0%. Further, it is assumed that: a straight line, which connects two points (0, 100) and (a, 0) to each other, indicates the under/over exposure probability in a case where the logarithmic value of the total average density ranges from 0 to the threshold value a.

While, it is assumed that when the logarithmic value of the total average density is 8.3, the under/over exposure probability is 100%, and when the logarithmic value of the total average density is the threshold value b, the under/over exposure probability is 0%. Further, a straight line, which connects two points (b, 0) and (8.3, 100) to each other, indicates the under/over exposure probability in a case where the logarithmic value of the total average density ranges from b to the threshold value 8.3.

Note that, in a case where the logarithmic value of the total average density ranges from a to b, it is assumed that: the logarithmic value indicates neither the underexposure nor the overexposure, so that the under/over exposure probability is 0.

By using the expectation table made in the foregoing manner, the exposure judging section 5 calculates the under/over exposure probability in accordance with the total average density.

Further, the grained area expecting section 6 outputs the under/over exposure probability calculated by the exposure judging section 5 as the expected grained area value to the second sharpening strength calculating section 7 described later. A reason for which the under/over exposure probability can be used as the expected grained area value in this manner is as follows: the grained area is increased in the output image, due to a process for strengthening contrast, in the case of underexposure, as described in BACKGROUND OF THE INVENTION.

While, another reason is as follows: in the case of the overexposure, an output of the CCD is smaller, and this causes an electric noise to be emphasized in the output image, so that the electric noise increases the grained area.

That is, it can be said that: as the under/over exposure probability is higher, the grained area is increased in the output image. Thus, the grained area expecting section 6 regards the under/over exposure probability as the expected grained area value.

(3) Procedure in which the second sharpening strength calculating section 7 adjusts the basic sharpening strength.

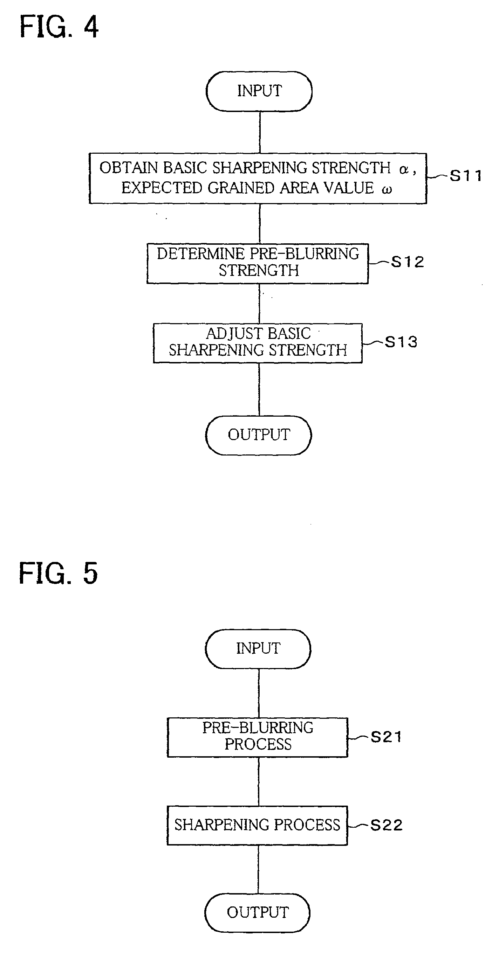

As shown in Fig. 4, in the procedure in which the second sharpening strength calculating section 7 adjusts the basic sharpening strength, at first in S11, the second sharpening strength calculating section 7 obtains the basic sharpening strength calculated by the first sharpening strength calculating section 4 and the expected grained area value calculated by the grained area expecting section 6.

Further, in a case where the sharpening process section 8 performs a pre-blurring process before the sharpening process described later, the second sharpening strength calculating section 7 calculates the pre-blurring strength S in accordance with the following Expression ① (S12).

$$S = S_{max} \times \omega \qquad \text{Expression ①}$$

Note that, $S_{max}$ is the maximum value of the pre-blurring strength that can be obtained in the pre-blurring process, and can be set as an arbitrary value such as 128 or 64 in advance. Further, $\omega$ is the expected grained area value obtained by the grained area expecting section 6.

Further, in a case where the sharpening process section 8 does not perform the pre-blurring process, the process of S12 is omitted, and it is not required to calculate the pre-blurring strength S.

Further, the second sharpening strength calculating section 7 adjusts the basic sharpening strength a, calculated by the first sharpening strength calculating section, in accordance with the following Expression ② , so as to calculate basic sharpening strength a' having been adjusted (S13).

$$\alpha' = \alpha \times (1 - \omega) \qquad \text{Expression ②}$$

Note that, $\omega$ indicates the expected grained area value obtained by the grained area expecting section 6 as in definition of the foregoing Expression ① .

The second sharpening strength calculating section 7 calculates the pre-blurring strength S and the basic sharpening strength $\alpha'$ having been adjusted, by performing the foregoing steps S11 to S13. The pre-blurring strength S and the basic sharpening strength $\alpha'$ having been adjusted both of which were calculated by the second sharpening strength calculating section 7 are used to perform the sharpening process in the sharpening process section 8 described later.

(4) Sharpening process performed by the sharpening process section 8.

The following description will discuss a case where the pre-blurring process is performed before the sharpening process, as an example of the sharpening process performed by the sharpening process section 8.

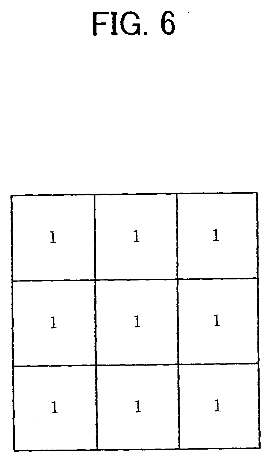

As shown in Fig. 5, as to the sharpening process performed by the sharpening process section 8, at first in S21, the pre-blurring process is performed. In the pre-blurring process, filtering is performed with respect to the input image data by using a moving average filter of $3 \times 3$ as shown in Fig. 6, so as to blur the whole image. Note that, the filtering is generally such that: a process for converting image data of a target pixel by using a desired filter is performed with respect to all the pixels except for pixels of end portions of the image while shifting the target pixels one by one. Further, in the pre-blurring process, a median filter, a Gaussian filter, and the like may be used so as to perform the filtering.

Next, in accordance with the following Expression ③ , data d' of a target pixel after the pre-blurring process is calculated from original data d of a target pixel before the pre-blurring process.

$$d' = d + (x/sum - d) \times (S/S_{max})$$
$$= d + (x/sum - d) \times \omega \qquad \cdots \text{Expression ③}$$

Note that, in the Expression ③ , S and $S_{max}$ are defined as in the foregoing Expression ① . Further, x is a total value of calculating results obtained upon filtering the respective pixels in the filter used to perform the pre-blurring process. The sum indicates the number of pixels of the filter used to perform the pre-blurring process.

According to the Expression ③ , when the expected grained area value ω is high, the pre-blurring strength is high. That is, when it is predicted that image quality is likely to be deteriorated due to the grained area in the output image, the pre-blurring process is performed with higher pre-blurring strength, so that it is possible to blur the noise in the input image more strongly.

Note that, it is not necessarily required to perform the pre-blurring process, but it is also possible to omit the pre-blurring process in a case where the expected grained area value ω is small. This is based on the following reason: also in S22, described later, that is performed in the sharpening process, the sharpening process is performed taking the expected grained area value ω into consideration, so that it is possible to reduce the grained area in the output image.

After finishing the pre-blurring process in S 21, the sharpening process is performed in S22. Examples of a concrete method for performing the sharpening process include (a) an emphasis based on primary differential operation, and (b) an emphasis based on secondary differential operation (Laplacian). That is, any sharpening process may be employed as long as the sharpening process causes the image blurred by the pre-blurring process to be restored, or makes edges of the image clearer. The following description exemplifies the emphasis based on Laplacian that is widely used since this enables the emphasizing process with comparative ease.

A typical Laplacian process is such that: Laplacian of each pixel of image data of an original image is subtracted from each pixel value of the image data, so that the edges are emphasized. Supposing that each pixel value of the image data of the original image, that is, an original signal is $f(i, j)$ ($i$ and $j$ indicate a coordinate), and supposing that each pixel having been subjected to the process based on Laplacian, that is, a process signals is $F(i, j)$, the following process is expressed by the following Expression ④ .

$$F(i, j) = f(i, j) - \alpha \cdot \nabla^2 f(i, j) \qquad \text{Expression ④}$$

In S22 of the present embodiment, the basic sharpening strength $\alpha'$, having been adjusted, that was calculated in S13 as the sharpening strength, is used. Thus, supposing that a signal having been subjected to the sharpening process is a signal $F'(i, j)$, the sharpening process performed in S22 is expressed by the following Expression ⑤ .

$$F(i, j) = f(i, j) - \alpha' \cdot \nabla^2 f(i, j)$$

$$= f(i, j) - \alpha(1 - \omega) \cdot \nabla^2 f(i, j) \quad \cdots \text{ Expression ⑤}$$

As described above, in S22, as the expected grained area value ω is larger, the basic sharpening strength $\alpha'$ having been adjusted is smaller. That is, in a case where the grained area is more likely to increase in the output image, the sharpening process is performed at the basic sharpening strength having been adjusted to low.

In this manner, the sharpening process is performed with low sharpening strength, so that a grainy cloud or an electric noise in the image information is hardly seen. Therefore, it is possible to reduce the grained area in the output image.

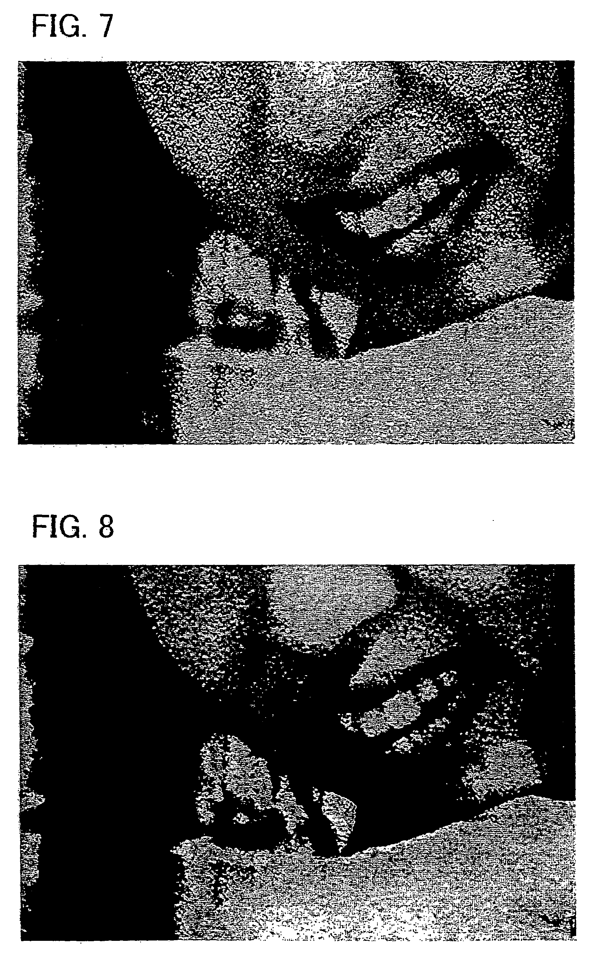

Note that, Fig. 7 shows a result obtained by outputting an image that has not been subjected to the image processing method according to the present invention, and Fig. 8 shows a result obtained by outputting an image that has been subjected to the image processing method according to the present invention.

In the image shown in Fig. 7, the grainy cloud on a film is made conspicuous, so that the whole image is made grained. While, as to the image shown in Fig. 8, the pre-blurring process is performed with the strength Smax taking the expected grained area value ω into consideration, and the sharpening process is performed with the basic sharpening strength a' having been adjusted, so that it is apparent that the grained area in the output image is reduced compared with the image shown in Fig. 7.

Note that, the image processing device 2 described above may be realized by an image processing program which is carried out as an image processing method by a computer. The program may be stored in a computer-readable storage medium (not shown) such as a CDROM. Further, it is also possible to arrange the image processing device by using a digital circuit such as a microprocessor which enables the image processing program to operate, and a DSP (Digital Signal Processor).

Further, in the description of the present embodiment, the input image to the image processing device 2 is an analog image recorded on the negative film. However, the image processing device of the present invention is not necessarily limited to the case where the input image is the analog image, but the image processing device of the present invention can be applied to the case where the input image is a digital image.

Further, the image processing device of the present invention may be arranged so that density of the input image is density obtained by averaging density of whole input image. Likewise, the image processing method of the present invention may be arranged so that the density of the input image is density obtained by averaging density of whole input image.

The average density of the input image is suitable for grasping the exposure of the input image. Further, the grained area of the output digital image tends to be influenced by the exposure of the input image.

That is, according to the image processing device arranged in the foregoing manner, the grained area expecting means expects the grained area in the output digital image in accordance with the average density of the input image, so that it is possible to expect the grained area more properly.

Further, also according to the image processing method arranged in the foregoing manner, the grained area of the output digital image is expected in accordance with the average density of the input image in the first step, so that it is possible to expect the grained area more properly. Therefore, it is possible to obtain such an effect that it is possible to output a digital image having more preferable image quality.

Further, the image processing device of the present invention arranged in the foregoing manner may be such that: in a case where the density of the input image is indicated by an x axis, and a probability (%) at which the grained area occurs in the output digital image is indicated by a y axis, and a minimum value of the density that can be obtained in the input image is indicated by MIN, and a maximum value of the density that can be obtained in the input image is indicated by MAX, the grained area expecting means calculates a probability at which the input image is in a state of underexposure or a probability at which the input image is in a state of overexposure, by using a table made by connecting coordinates (MIN, 100), (a, 0), (b, 0), and (MAX, 100) to each other (MIN<a<b<MAX), and the grained area expecting means regards the probability, at which the input image is in the state of the underexposure or in the state of the overexposure, as a rate at which the grained area occurs in the output digital image.

Further, the image processing method of the present invention may be such that: in a case where the density of the input image is indicated by an x axis, and a probability (%) at which the grained area occurs in the output digital image is indicated by a y axis, and a minimum value of the density that can be obtained in the input image is indicated by MIN, and a maximum value of the density that can be obtained in the input image is indicated by MAX, the first step is such that a probability at which the input image is in a state of underexposure or a probability at which the input image is in a state of overexposure is calculated by using a table made by connecting coordinates (MIN, 100), (a, 0), (b, 0), and (MAX, 100) to each other (MIN<a<b<MAX), and the probability, at which the input image is in the state of the underexposure or in the state of the overexposure, is regarded as a rate at which the grained area occurs in the output digital image.

That is, according to the image processing device arranged in the foregoing manner, the grained area expecting means calculates a probability at which the input image is in a state of underexposure or a probability at which the input image is in a state of overexposure, by using a table made in the foregoing simple manner, so as to regard the calculated probability as the rate at which the grained area occurs. That is, it is possible to expect the grained area brought about in the output digital image by performing a simple process as in the foregoing image processing device.

Thus, it is possible to obtain such an effect that it is possible to output a digital image, having preferable image quality, in which the grained area is reduced by a simpler process.

Further, the image processing device of the present invention arranged in the foregoing manner is such that: the sharpening strength calculating means performs a pre-blurring process before performing the sharpening process with respect to the input image, and the sharpening strength calculating means adjusts strength of the pre-blurring process performed with respect to the input image, corresponding to an expected result obtained by the grained area expecting means.

Further, the image processing method of the present invention arranged in the foregoing manner is such that: a pre-blurring process is performed before performing the sharpening process with respect to the input image, and in the second step, strength of the pre-blurring process performed with respect to the input image is adjusted corresponding to an expected result obtained in the first step.

According to the image processing device arranged in the foregoing manner, in a case where the grained area expecting means expects the grained area brought about in the output digital image to be great, it is possible to set the sharpening strength calculating means so that the pre-blurring strength is high. When the pre-blurring process is performed with the high pre-blurring strength, it is possible to blur the grainy cloud or the electric noise etc. in the input image to such an extent that they are not conspicuous in the output digital image.

Further, as to the image processing method arranged in the foregoing manner, the same actions as in (a) the grained area expecting means in the image processing device and (b) the sharpening strength calculating means of the image processing device are respectively realized in the first step and the second step.

Thus, it is possible to obtain such an effect that it is possible to output a digital image, having preferable image quality, in which the grained area is further reduced.

Further, the program of the present invention causes a computer to carry out the respective steps of any one of the image processing methods arranged in the foregoing manner.

According to the program, the computer is made to carry out the image processing method of the present invention, so that it is possible to obtain such an effect that it is possible to output a digital image, having preferable image quality, in which the grained area is reduced.

Further, the storage medium of the present invention is a computer-readable storage medium storing the program.

According to the storage medium, it is possible to obtain such an effect that it becomes easy to provide a program carrying out the image processing method by which it is possible to obtain an output image, having preferable image quality, in which the grained area is reduced.

The invention being thus described, it will be obvious that the same may be varied in many ways. Such variations are not to be regarded as a departure from the spirit and scope of the invention, and all such modifications as would be obvious to one skilled in the art intended to be included within the scope of the following claims.

**Claims**

1. An image processing device (2), which performs a sharpening process with respect to an input image so as to output a digital image, comprising:

   grained area expecting means (5, 6) for expecting grained area of an output digital image in accordance with density of the input image; and
   sharpening strength calculating means (7) for adjusting strength of a sharpening process performed with respect to the input image, corresponding to an expected result obtained by the grained area expecting means (5, 6).

2. The image processing device (2) as set forth in claim 1, wherein the density of the input image is obtained by averaging density of the input image in its entirety.

3. The image processing device (2) as set forth in claim 1 or 2, wherein:

   in a case where the density of the input image is indicated by an x axis, and a probability (%) at which the grained area occurs in the output digital image is indicated by a y axis, and a minimum value of the density that can be obtained in the input image is indicated by MIN, and a maximum value of the density that can be obtained in the input image is indicated by MAX,
   the grained area expecting means (5, 6) calculates a probability at which the input image is in a state of underexposure or a probability at which the input image is in a state of overexposure, by using a table made by connecting coordinates (MIN, 100), (a, 0), (b, 0), and (MAX, 100) to each other (MIN<a<b<MAX), and
   the grained area expecting means (5, 6) regards the probability, at which the input image is in the state of the underexposure or in the state of the overexposure, as a rate at which the grained area occurs in the output digital image.

4. The image processing device (2) as set forth in any one of claims 1 to 3, wherein the image processing device (2) performs a pre-blurring process before performing the sharpening process with respect to the input image, and causes the sharpening strength calculating means (7) to adjust strength of the pre-blurring process performed with respect to the input image, corresponding to an expected result obtained by the grained area expecting means (5, 6).

5. An image processing method of performing a sharpening process with respect to an input image so as to output a digital image, comprising:

   a first step of expecting grained area brought about in the digital image, in accordance with density of the input image; and
   a second step of adjusting strength of the sharpening process performed with respect to the input image, corresponding to an expected result obtained in the first step.

6. The method as set forth in claim 5, wherein the density of the input image is obtained by averaging density of the input image in its entirety.

**7.** The method as set forth in claim 5 or 6, wherein:

in a case where the density of the input image is indicated by an x axis, and a probability (%) at which the grained area occurs in the output digital image is indicated by a y axis, and a minimum value of the density that can be obtained in the input image is indicated by MIN, and a maximum value of the density that can be obtained in the input image is indicated by MAX,

in the first step, a probability at which the input image is in a state of underexposure or a probability at which the input image is in a state of overexposure is calculated by using a table made by connecting coordinates (MIN, 100), (a, 0), (b, 0), and (MAX, 100) to each other (MIN<a<b<MAX), and

the probability, at which the input image is in the state of the underexposure or in the state of the overexposure, is regarded as a rate at which the grained area occurs in the output digital image.

**8.** The method as set forth in any one of claims 5 to 7, wherein:

a pre-blurring process is performed before performing the sharpening process with respect to the input image, and

in the second step, strength of the pre-blurring process performed with respect to the input image is adjusted corresponding to an expected result obtained in the first step.

**9.** A program, causing a computer to carry out an image processing method of performing a sharpening process with respect to an input image so as to output a digital image, wherein said method includes:

a first step of expecting grained area brought about in the digital image, in accordance with density of the input image; and

a second step of adjusting strength of the sharpening process performed with respect to the input image, corresponding to an expected result obtained in the first step.

**10.** A computer-readable storage medium, storing a program which causes a computer to carry out an image processing method of performing a sharpening process with respect to an input image so as to output a digital image, wherein said method includes:

a first step of expecting grained area brought about in the digital image, in accordance with density of the input image; and

a second step of adjusting strength of the sharpening process performed with respect to the input image, corresponding to an expected result obtained in the first step.

EP 1 330 114 A2

# FIG. 1

# FIG. 2

```
        ┌──────────┐
        │  INPUT   │
        └──────────┘
             │
   ┌────────────────────┐
   │  JUDGE FILM TYPE   │──S1
   └────────────────────┘
             │
   ┌────────────────────┐
   │   OBTAIN INPUT     │──S2
   │    RESOLUTION      │
   └────────────────────┘
             │
   ┌────────────────────┐
   │    CALCULATE       │──S3
   │  EXPANSION RATE    │
   └────────────────────┘
             │
   ┌────────────────────┐
   │  DETERMINE BASIC   │──S4
   │ SHARPENING STRENGTH│
   └────────────────────┘
             │
        ┌──────────┐
        │  OUTPUT  │
        └──────────┘
```

# FIG. 3

X-axis: TOTAL AVERAGE DENSITY (0, a, b, 8.3 (ln2$^{12}$))

Y-axis: UNDER/OVER EXPOSURE PROBABILITY (100(%), 0)

← OVEREXPOSURE

UNDEREXPOSURE →

# FIG. 4

```
            ( INPUT )
               │
 ┌─────────────────────────────────┐
 │ OBTAIN BASIC SHARPENING STRENGTH α, │──── S11
 │ EXPECTED GRAINED AREA VALUE ω       │
 └─────────────────────────────────┘
               │
      ┌──────────────────────┐
      │ DETERMINE PRE-BLURRING │──── S12
      │      STRENGTH          │
      └──────────────────────┘
               │
      ┌──────────────────────┐
      │   ADJUST BASIC         │──── S13
      │ SHARPENING STRENGTH    │
      └──────────────────────┘
               │
           ( OUTPUT )
```

# FIG. 5

```
            ( INPUT )
               │
      ┌──────────────────────┐
      │   PRE-BLURRING         │──── S21
      │     PROCESS            │
      └──────────────────────┘
               │
      ┌──────────────────────┐
      │  SHARPENING PROCESS    │──── S22
      └──────────────────────┘
               │
           ( OUTPUT )
```

# FIG. 6

FIG. 7

FIG. 8